# FASCICULE DE BREVET EUROPEEN

(11) **EP 2 735 045 B1**
(45) Date de publication et mention de la délivrance du brevet: **16.09.2015**
(21) Numéro de dépôt: 12735151.8
(22) Date de dépôt: 16.07.2012
(51) Int. Cl.: H01M 6/34, H01M 6/36, H01M 2/40, F42B 19/00, F42B 19/24, G05D 7/01, B63G 8/08

(54) **ENGIN SOUS-MARIN COMPRENANT UNE PILE ÉLECTROCHIMIQUE**
UNTERWASSERFAHRZEUG MIT EINER ELEKTROCHEMISCHEN BATTERIE
UNDERWATER CRAFT HAVING AN ELECTROCHEMICAL BATTERY

(30) Priorité: 21.07.2011 FR 1156623
(43) Date de publication de la demande: 28.05.2014
(73) Titulaire: DCNS, 75015 Paris (FR)
(72) Inventeur: SENEZ, Thomas, F-83400 HYERES (FR)
(74) Mandataire: Domenego, Bertrand
(86) Numéro de dépôt international: PCT/EP2012/063891
(87) Numéro de publication internationale: WO 2013/010980

(56) Documents cités:
- EP-A1- 0 669 666
- FR-A- 1 457 287
- FR-A1- 2 862 433
- US-A- 3 154 040
- US-A- 3 959 023

## Description

La présente invention concerne un engin sous-marin, tel que notamment une torpille, comportant une pile électrochimique activée par électrolyte destinée à produire de l'énergie électrique d'alimentation de l'engin sous-marin, la pile électrochimique comportant :
- une cellule électrochimique de production de l'énergie électrique ;
- un réservoir destiné à contenir l'électrolyte ;
- au moins un conduit d'amenée d'eau de mer débouchant dans le réservoir ;
- un régulateur du débit d'eau de mer agencé en amont du réservoir.

De tels engins sous-marins, formés par exemple par une torpille telle qu'une torpille dite torpille « lourde », comprennent une pile électrochimique activée par électrolyte et qui est destinée à produire de l'énergie électrique d'alimentation du reste de l'engin pour son fonctionnement, sa motorisation...

De tels moyens d'alimentation en énergie électrique de ce type d'engin sont déjà connus dans l'état de la technique.

Ainsi, on pourra par exemple se reporter au document FR-A-2 862 433, qui décrit un engin sous-marin muni d'une pile électrochimique activée par un électrolyte. La pile électrochimique comprend une cellule électrochimique de production de l'énergie électrique, un réservoir destiné à contenir l'électrolyte et des moyens de mise en circulation de l'électrolyte entre la cellule électrochimique et le réservoir. L'électrolyte est stocké dans le réservoir à l'état anhydre. Lorsque l'engin sous-marin est immergé, et suite à une commande d'admission d'eau, de l'eau de mer du milieu aquatique environnant est admise dans le réservoir par un conduit d'amenée d'eau de mer pour dissoudre l'électrolyte anhydre afin de former l'électrolyte liquide.

Le document FR-A-2 862 433 décrit de prévoir un régulateur de débit, destiné à réguler le débit d'eau de mer entrant dans le réservoir. Ce régulateur de débit comprend un circuit de prépositionnement qui a pour fonction de régler la restriction créée par le régulateur de débit en fonction de la pression d'immersion préalablement à l'admission de l'eau de mer dans le conduit d'amenée.

Un tel régulateur de débit ne donne pas entière satisfaction. En effet, il a été constaté qu'à des pressions d'immersion élevées, ce régulateur de débit régule insuffisamment le débit d'eau de mer entrant dans le réservoir. De ce fait, l'eau de mer pénètre dans le réservoir à un débit trop élevé, ce qui engendre un risque important de détérioration des organes, en particulier hydrauliques, agencés en aval du régulateur de débit. Cette détérioration des organes en aval du régulateur engendre un risque d'obturation de la boucle hydraulique par des morceaux des organes détériorés.

US 3 154 040 décrit une torpille comprenant une vanne de régulation du débit d'électrolyte à travers la pile en fonction de la vitesse de la torpille.

Un but de l'invention est de proposer un dispositif de régulation du débit d'eau de mer pénétrant dans la section pile d'un engin sous-marin qui soit de conception simple et qui permette une régulation fiable du débit d'eau de mer entrant dans le réservoir quelle que soit la pression d'immersion.

A cet effet, l'invention a pour objet un engin sous-marin selon la revendication 1.

L'engin sous-marin selon l'invention peut également comprendre l'une ou plusieurs des caractéristiques des revendications 2 à 6, prise(s) isolément ou selon toute(s) combinaison(s) techniquement possible(s).

L'invention sera mieux comprise à la lecture de la description qui va suivre, donnée uniquement à titre d'exemple et faite en se référant aux dessins annexés, sur lesquels :
- la figure 1 est un schéma synoptique illustrant la structure générale d'une section de pile électrochimique entrant dans la constitution d'un engin sous-marin selon l'invention et comprenant un régulateur de débit selon l'invention ;
- la figure 2 est une vue en coupe du régulateur de débit de la figure 1 dans une configuration d'ouverture maximale ; et
- la figure 3 est une vue en coupe du régulateur de débit de la figure 1 dans une configuration de restriction maximale.

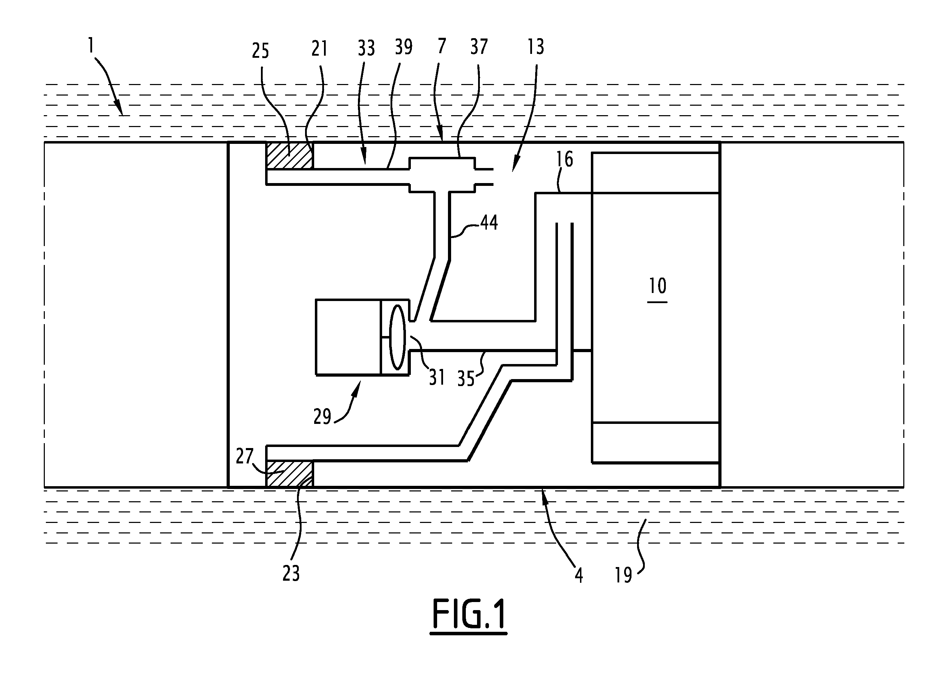

On a illustré sur ces figures et en particulier sur la figure 1, une portion d'un engin sous-marin 1, constitué par exemple par une torpille dite « lourde ». La portion de cet engin 1 illustrée plus particulièrement sur les figures est la partie appelée section pile 4 d'un tel engin 1.

De façon classique et comme cela a été décrit dans le document antérieur FR-A-2 862 433 mentionné précédemment, la section pile 4 comprend une pile électrochimique 7 activée par électrolyte et destinée à produire de l'énergie électrique d'alimentation du reste de l'engin 1 pour son fonctionnement, sa motorisation...

Cette pile électrochimique 7 comprend une cellule électrochimique 10 de production de l'énergie électrique, associée à un réservoir 13 destiné à contenir l'électrolyte. L'électrolyte est stocké dans le réservoir 13 sous forme anhydre. De façon classique, un séparateur de gaz 16 agencé à la sortie de la cellule électrochimique 10 est propre à séparer l'électrolyte liquide sortant de la cellule électrochimique 10 des gaz produits par la réaction d'électrolyse dans la cellule électrochimique 10 et ainsi à recycler l'électrolyte liquide.

La pile électrochimique 7 communique avec le milieu aquatique 19 environnant l'engin sous-marin 1 par l'intermédiaire d'un orifice d'admission 21, propre à autoriser l'entrée d'eau de mer dans la pile électrochimique 7 depuis le milieu aquatique environnant 19, et par l'intermédiaire d'un orifice d'évacuation 23 des effluents issus de la pile électrochimique 7 vers le milieu aquatique environnant 19. L'orifice d'évacuation 23 sert à évacuer de la pile électrochimique 7 les gaz issus de la cellule électrochimique 10 et séparés de l'électrolyte liquide dans le séparateur de gaz 16. L'orifice d'évacuation 23 est muni d'un clapet anti-retour qui interdit l'entrée d'eau de mer dans la pile électrochimique 7 depuis le milieu aquatique environnant 19 par l'orifice d'évacuation 23.

Avant l'activation de la pile électrochimique 7, l'orifice d'admission 21 et l'orifice d'évacuation 23 sont respectivement obturés de manière étanche par un premier organe d'obturation 25 et par un deuxième organe d'obturation 27, formés par exemple par des bouchons. Les premier et le deuxième organes d'obturation 25, 27 assurent l'étanchéité du réservoir 13 pendant toutes les phases de stockage de la pile 7, ainsi que pendant la phase de lancement de l'engin sous-marin 1.

Des moyens de formation et de mise en circulation de l'électrolyte liquide sont interposés entre l'orifice d'admission 21 et le réservoir 13. Ils sont propres à aspirer de l'eau de mer depuis le milieu aquatique environnant 19 et à la rejeter dans le réservoir 13 de manière à dissoudre l'électrolyte sous forme anhydre afin de former l'électrolyte liquide lors de l'amorçage de la pile électrochimique 7. Ils sont également propres à aspirer l'électrolyte liquide issu du séparateur de gaz 16 et à le rejeter dans le réservoir 13 de manière à permettre sa circulation en circuit fermé dans la pile électrochimique 7 entre la cellule électrochimique 10 et le réservoir 13.

Dans le mode de réalisation illustré, les moyens de formation et de mise en circulation de l'électrolyte liquide comprennent un groupe motopompe 29. Une buse d'aspiration 31 du groupe motopompe 29 est reliée à l'orifice d'admission 21 par un conduit d'amenée 33. Elle est en outre reliée à la sortie du séparateur de gaz 16 par un conduit de liaison 35.

La pile électrochimique 7 comprend en outre un régulateur de débit 37 propre à réguler le débit d'admission de l'eau de mer dans le réservoir 13 depuis le milieu aquatique environnant 19.

Comme illustré sur la figure 1, le régulateur de débit 37 est agencé dans le réservoir 13. Il est situé hydrauliquement en amont de l'entrée du réservoir 13. Il est en particulier situé hydrauliquement en aval de l'orifice d'admission 21 au niveau du conduit d'amenée 33. Il est ainsi situé hydrauliquement en amont des moyens de formation et de mise en circulation de l'électrolyte, en particulier du groupe motopompe 29. Ainsi, l'eau de mer entrant dans la pile électrochimique 7 par l'orifice d'admission 21 traverse le régulateur de débit 37 où son débit est ajusté à un débit prédéterminé avant de pénétrer dans le réservoir 13 avec un débit sensiblement égal au débit prédéterminé.

Le régulateur de débit 37 est relié hydrauliquement au conduit d'amenée 33. Comme illustré sur la figure 1, le conduit d'amenée 33 comprend une tubulure d'entrée 39 connectant l'orifice d'admission 21 à une entrée du régulateur de débit 37, et une tubulure de sortie 44 connectant une sortie du régulateur de débit 37 aux moyens de formation et de mise en circulation de l'électrolyte liquide, en particulier à la buse d'aspiration 31 du groupe motopompe 29.

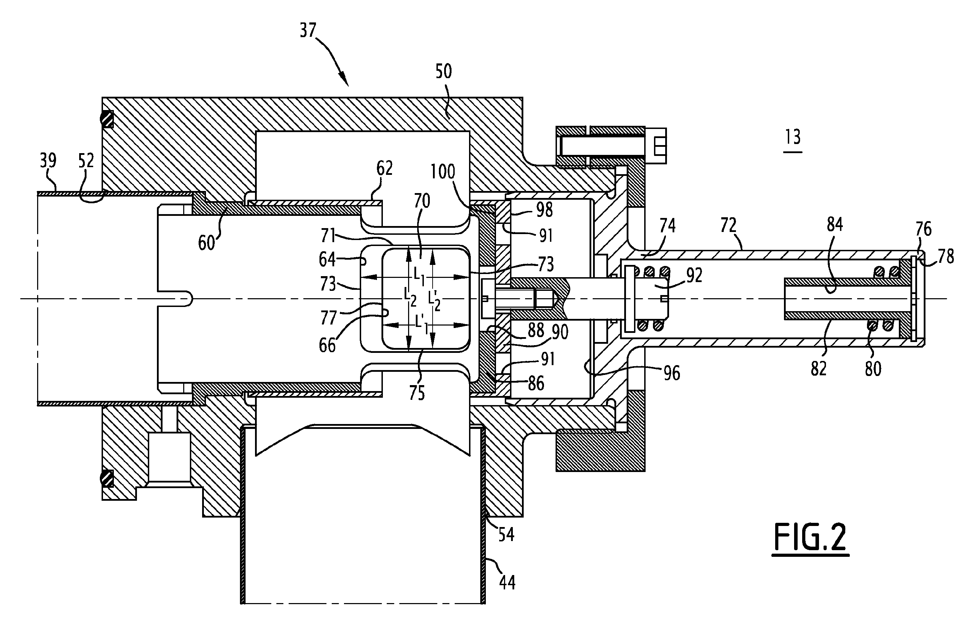

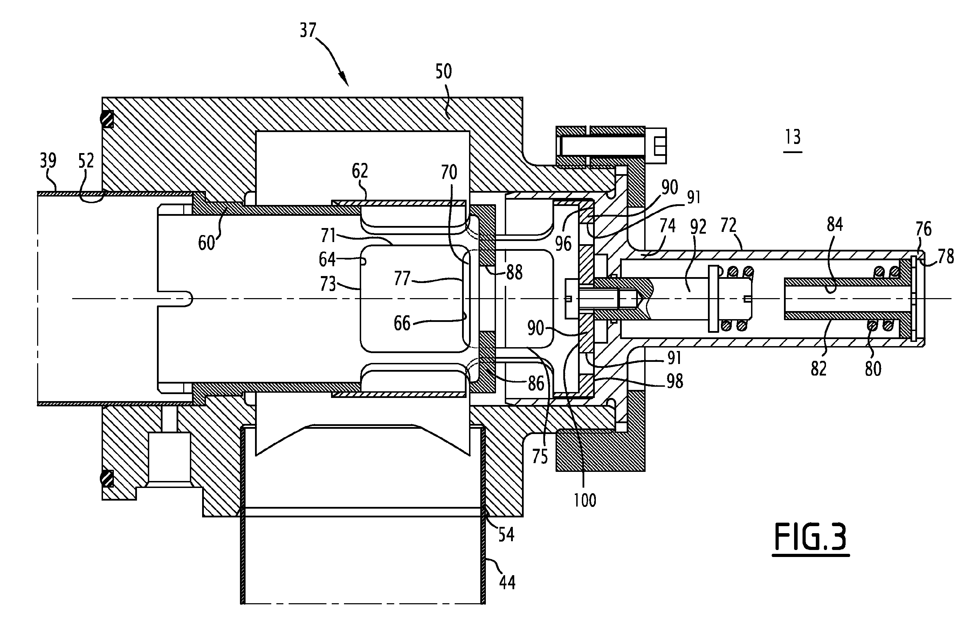

Le régulateur de débit 37 est illustré plus en détail sur les figures 2 et 3. Il comprend un ensemble de régulation comprenant un carter fixe 60 et un tiroir mobile 62, munis chacun de lumières 64, 66, s'étendant respectivement à travers une paroi circonférentielle du carter 60 et à travers une paroi circonférentielle du tiroir 62. L'ensemble de régulation est agencé dans un corps 50 fixé dans le réservoir 13. Le carter 60 est fixe par rapport au corps 50. L'ensemble de régulation comporte des ouvertures de sortie 70 d'eau de mer, correspondant chacune à une zone de coïncidence entre une lumière 64 du carter 60 et une lumière 66 du tiroir 62.

Le carter 60 et le tiroir 62 sont propres à coopérer entre eux pour réguler le débit d'eau de mer sortant du régulateur de débit 37 et pénétrant dans le réservoir 13 par ajustement de l'aire des ouvertures de sortie 70 de l'ensemble de régulation. A cet effet, le tiroir 62 est déplaçable en translation axiale sur le carter 60 selon une direction de déplacement axiale sous l'effet de la pression exercée par l'eau de mer entrant dans le régulateur de débit 37 à l'encontre de moyens de sollicitation élastique jusqu'à une position d'équilibre. Le tiroir 62 est en particulier déplaçable par rapport au carter 60 entre deux positions d'équilibre extrêmes, une position d'ouverture maximale (figure 2) et une position de restriction maximale (figure 3). Ces deux positions d'équilibre extrêmes correspondent chacune à une butée du tiroir 62 suivant la direction de déplacement. Les moyens de sollicitation élastique sont interposés entre le tiroir 62 et le carter 60. Ils sont propres à rappeler le tiroir 62 vers sa position d'ouverture maximale.

Le déplacement du tiroir 62 par rapport au carter 60 engendre une variation de l'aire des ouvertures de sortie 70 de l'ensemble de régulation. Dans la position d'équilibre du tiroir 62, les ouvertures de sortie 70 présentent une aire fonction de la pression de l'eau entrant dans le régulateur de débit 37. Cette aire est adaptée pour engendrer le débit de sortie prédéterminé de l'eau de mer en direction du réservoir 13 en fonction de la pression de l'eau entrant dans le régulateur de débit 37. En particulier, l'aire des ouvertures de sortie 70 de l'ensemble de régulation diminue au fur et à mesure du déplacement du tiroir 62 de sa position d'ouverture maximale vers sa position de restriction maximale. Ainsi, l'aire des ouvertures de sortie 70 est maximale dans la position d'ouverture maximale. Elle est minimale dans la position de restriction maximale.

Chaque lumière 64 du carter 60 est délimitée par deux premiers bords 71 et par deux deuxièmes bords 73. Les deuxièmes bords 73 relient entre eux les premiers bords 71. Les premiers bords 71 sont sensiblement parallèles entre eux. Ils sont en outre sensiblement parallèles à la direction de déplacement du tiroir 62. Les deuxièmes bords 73 forment des courbes parallèles entre elles. En projection dans un plan passant par les deux premiers bords 71, la longueur L₁ des premiers bords 71 est sensiblement égale à la longueur L₂ des deuxièmes bords 73. En particulier, en projection dans le plan passant par les deux premiers bords 71, la différence entre la longueur L₁ des premiers bords 71 et la longueur L₂ des deuxièmes bords 73 est inférieure à 10%, notamment inférieure à 7,5%. En projection dans le plan passant par les deux premiers bords 71, les lumières 64 du carter 60 présentent une forme sensiblement carrée.

De manière analogue, chaque lumière 66 du tiroir 62 est délimitée par deux premiers bords 75 et par deux deuxièmes bords 77. Les deuxièmes bords 77 relient entre eux les premiers bords 75. Les premiers bords 75 sont sensiblement parallèles entre eux. Ils sont en outre sensiblement parallèles à la direction de déplacement du tiroir 62. Les deuxièmes bords 77 forment des courbes parallèles entre elles. En projection dans un plan passant par les deux premiers bords 75, la longueur L'₁ des premiers bords 75 est notamment strictement inférieure à la longueur L'₂ des deuxièmes bords 77. En projection dans le plan passant par les deux premiers bords 75, les lumières 66 du tiroir 62 présentent une forme sensiblement rectangulaire.

La longueur L'₁ des premiers bords 75 des lumières 66 du tiroir 62 est strictement inférieure à la longueur L₁ des premiers bords 71 des lumières 64 du carter 60. En particulier, elle est inférieure d'au moins 17%, notamment d'au moins 19 % à la longueur L₁ des premiers bords 71 des lumières 64 du carter 60.

Les premiers bords 71, 75 respectifs des lumières 64 et 66 coïncident sensiblement.

L'aire des lumières 66 du tiroir 62 est avantageusement inférieure à celle des lumières 64 du carter 60.

La longueur L'₁ des premiers bords 75 des lumières 66 du tiroir 62 a été choisie de manière à ce que les ouvertures de sortie 70 soient quasiment fermées dans la position de restriction maximale du tiroir 62 (figure 3), c'est-à-dire de manière à ce que l'aire des ouvertures de sortie 70 soit très faible. Ainsi, lorsque la pression hydraulique est élevée, la perte de charge au niveau des ouvertures de sortie 70 est élevée et le débit de sortie du régulateur 37 est limité.

Comme cela est illustré sur les figures 2 et 3, le corps 50 comprend un orifice d'entrée 52 connecté à la tubulure d'entrée 39 du conduit d'amenée 33 et un orifice de sortie 54 connecté à la tubulure de sortie 44 du conduit d'amenée 33. L'orifice d'entrée 52 et l'orifice de sortie 54 s'étendent chacun sensiblement dans un plan moyen. On définit l'axe central de chaque orifice 52, 54 comme l'axe passant par le centre géométrique de l'orifice 52, 54 et sensiblement perpendiculaire au plan moyen de l'orifice 52, 54. Comme illustré sur les figures 2 et 3, l'axe central de l'orifice d'entrée 52 est sensiblement perpendiculaire à l'axe central de l'orifice de sortie 54. Au niveau de leur jonction avec le corps 50 du régulateur de débit 37, la tubulure d'entrée 39 et la tubulure de sortie 44 s'étendent suivant des axes sensiblement perpendiculaires entre eux. Le corps 50 s'étend selon une direction d'allongement sensiblement confondue avec l'axe central de l'orifice d'entrée 52.

Dans la suite de la description, on qualifie de « proximale » la partie d'un élément la plus proche de l'orifice d'entrée 52 et de « distale » la partie d'un élément la plus éloignée de l'orifice d'entrée 52 suivant la direction d'allongement du corps 50.

Le corps 50 se prolonge à son extrémité distale par un manchon allongé creux 72, par exemple sensiblement cylindrique. Le manchon allongé creux 72 comprend une extrémité proximale 74 liée au corps 50 et une extrémité distale libre 76. L'intérieur du manchon allongé creux 72 communique avec le réservoir 13 par l'intermédiaire d'un orifice 78 formé à l'extrémité libre 76. Les moyens de sollicitation élastique sont agencés dans ce manchon 72. Dans le mode de réalisation représenté, les moyens de sollicitation élastique sont formés par un ressort hélicoïdal de compression 80.

En option, une tige 82 de fixation et de guidage des moyens de sollicitation élastique, par exemple sensiblement cylindrique, est fixée intérieurement à l'extrémité libre 76 du manchon 72 et s'étend en direction de l'extrémité proximale liée 74. La tige de fixation et de guidage 82 est coaxiale au manchon 72. Elle est creuse et comprend un passage intérieur 84 débouchant dans le réservoir 13 par l'orifice 78. Ainsi, le régulateur de débit 37 communique avec le réservoir 13 par l'intermédiaire de l'orifice 78. Du côté proximal, le passage intérieur 84 débouche dans l'espace intérieur du manchon 72.

Une partie distale du ressort 80 est engagée sur la tige de fixation et de guidage 82 et une extrémité distale du ressort 80 est fixée à l'extrémité distale de la tige 82. La longueur de la tige de fixation et de guidage 82 est choisie de telle sorte que la tige 82 soit apte à assurer le guidage du ressort 80 pendant sa compression de manière à éviter sa torsion.

Le carter 60 et le tiroir 62 s'étendent suivant des directions d'allongement respectives sensiblement alignées avec l'axe d'allongement du corps 50 et avec la direction de coulissement du tiroir 62. Le tiroir 62 entoure extérieurement une partie du carter 60 et coulisse sur celui-ci. Ce carter 60 et le tiroir 62 sont par exemple formés par deux cylindres creux sensiblement coaxiaux ouverts à leur extrémité proximale. A son extrémité distale, le carter 60 comprend un fond 86 muni d'un orifice traversant 88. L'orifice traversant 88 est en particulier formé au centre du fond 86. Le tiroir 62 est fermé à son extrémité distale par un fond 90. Dans le mode de réalisation représenté, le fond 90 comprend des ouvertures traversantes 91 par lesquelles s'évacue l'air présent entre le fond 90 du tiroir 62 et le corps 50 lorsque le tiroir 62 se déplace vers sa position de restriction maximale. Le tiroir 62 est prolongé distalement par une tige 92 qui fait saillie dans le manchon 72. La tige 92 est solidaire du tiroir 62. Elle est par exemple fixée sur le fond 90 du tiroir 62 par tout moyen de fixation adapté, notamment par vissage.

Une partie proximale du ressort 80 est engagée sur une partie distale de la tige 92 et une extrémité proximale du ressort 80 est fixée à cette partie distale de la tige 92. Ainsi, le ressort 80 est fixé d'une part à la tige de guidage et de fixation 82 qui est fixe par rapport au corps 50, et donc par rapport au carter 60, et d'autre part à la tige 92 qui est solidaire du tiroir 62.

Le déplacement du tiroir 62 en direction de sa position de restriction maximale engendre une translation de la tige 92 dans le manchon 72 et, par voie de conséquence, un rapprochement de l'extrémité distale de la tige 92 de la tige de guidage et de fixation 82. Le ressort 80 est alors comprimé. Dans la position de restriction maximale (figure 3), le fond 90 du tiroir 62 est à l'écart du fond 86 du carter 60. Il est en butée distale contre une surface de butée 96 ménagée dans le corps 50. Une face distale 98 du fond 90 est alors en butée contre la surface de butée 96.

Dans la position d'ouverture maximale (figure 2), le fond 90 du tiroir 62 est en butée proximale contre le fond 86 du carter 60. Une face proximale 100 du fond 90 est alors en butée contre le fond 86 du carter 60.

Le déplacement du tiroir 62 de sa position d'ouverture maximale vers sa position de restriction maximale correspond à un déplacement du tiroir 62 en direction de l'extrémité distale du corps 50.

Le fonctionnement du régulateur de débit 37 va maintenant être expliqué.

Initialement, c'est-à-dire avant l'activation de la pile 7, le tiroir 62 est dans sa position d'ouverture maximale en butée contre le fond 86 du carter 60. La pression dans le réservoir 13 est sensiblement égale à la pression atmosphérique.

Lors de l'activation de la pile 7, après la phase de lancement de l'engin 1, le premier organe d'obturation 25 est ouvert, par exemple par l'intermédiaire d'un actionneur pyrotechnique. L'eau de mer du milieu aquatique environnant 19 pénètre alors dans le conduit d'admission 33 à une pression sensiblement égale à la pression d'immersion de l'engin 1. Elle pénètre ensuite dans le carter 60 par la tubulure d'entrée 39 à une pression égale à la pression d'immersion. Elle passe ensuite par l'orifice 88 formé dans le fond 86 du carter 60 et exerce une pression dirigée selon la direction de déplacement du tiroir 62 sur la face proximale 100 du fond 90 du tiroir 62. La pression exercée sur le tiroir 62 dépend de la pression d'immersion. Sous l'effet de cette pression, le tiroir 62 se déplace en direction de l'extrémité distale du corps 50 à l'encontre des moyens de sollicitation élastique jusqu'à une position d'équilibre. La distance de déplacement du tiroir 62 à partir de la position d'ouverture maximale dépend de la pression exercée par l'eau de mer sur le tiroir 62 et donc de la pression d'immersion.

Le déplacement du tiroir 62 par rapport au carter 60 engendre un déplacement des lumières 66 du tiroir 62 par rapport aux lumières 64 du carter 60 et ainsi une diminution de l'aire des ouvertures de sortie 70. Cette diminution est proportionnée au déplacement du tiroir 62 et donc à la pression d'immersion. Dans la position d'équilibre du tiroir 62, l'aire des ouvertures de sortie 70 est telle que le débit d'eau de mer sortant radialement par les ouvertures de sortie 70 soit égal au débit prédéterminé souhaité en sortie du régulateur de débit 37. L'eau de mer sortie par les ouvertures de sortie 70 sort du régulateur de débit 37 par la tubulure de sortie 44. Elle est alors aspirée par la buse d'aspiration 31 du groupe motopompe 29 et rejetée dans le réservoir 13 qu'elle remplit progressivement.

Le régulateur de débit 37 selon l'invention ne comprend pas de circuit de prépositionnement. Le déplacement du tiroir mobile 62 jusqu'à sa position d'équilibre est engendré directement par la pression de l'eau de mer pénétrant dans le régulateur de débit 37 à partir de l'orifice d'admission 21.

La suppression du circuit de prépositionnement engendre les avantages suivants. Il est possible de ne prévoir qu'un unique orifice d'admission d'eau de mer dans le régulateur de débit, à savoir l'orifice d'admission 21, alors qu'en présence du circuit de prépositionnement, il était nécessaire de prévoir un orifice de prépositionnement dédié au circuit de prépositionnement permettant la prise de la pression d'immersion appliquée ensuite au tiroir du régulateur de débit pour son prépositionnement. La suppression de cet orifice de prépositionnement débouchant dans le milieu aquatique environnant garantit une meilleure étanchéité de la section pile de l'engin sous-marin.

Par ailleurs, la suppression du circuit de prépositionnement engendre également une diminution de la masse et de l'encombrement de cette partie de la pile.

Enfin, en présence du circuit de prépositionnement, il était nécessaire de prévoir une paroi du corps du régulateur de débit, entre la surface de butée du corps et le manchon creux, d'épaisseur suffisante pour y loger une partie du circuit de prépositionnement. La suppression du circuit de prépositionnement permet de diminuer l'épaisseur de cette paroi tout en conservant la longueur totale du régulateur de débit. Il devient ainsi possible d'augmenter la course du tiroir et ainsi d'augmenter la restriction à forte pression d'immersion de manière à conserver un débit de sortie sensiblement constant quelle que soit la pression d'immersion.

La forme particulière des lumières permet d'obtenir une régulation franche du débit. En outre, le fait que la longueur des lumières du tiroir soit inférieure à celle des lumières du carter permet d'obtenir une meilleure restriction à forte pression d'immersion que dans les régulateurs de l'état de la technique.

La forme des lumières du carter et du tiroir mobile est choisie de manière à obtenir une bonne régulation du débit à la fois à faible pression d'immersion et à forte pression d'immersion compte tenu de l'augmentation de la course du tiroir mobile rendue possible par la suppression du tiroir de prépositionnement.

## Revendications

1. Engin sous-marin (1) comportant une pile électrochimique (7) activée par électrolyte destinée à produire de l'énergie électrique d'alimentation de l'engin sous-marin (1), la pile électrochimique (7) comportant :
- une cellule électrochimique (10) de production de l'énergie électrique ;
- un réservoir (13) destiné à contenir l'électrolyte ;
- au moins un conduit (33) d'amenée d'eau de mer débouchant dans le réservoir (13) ;
- un régulateur du débit d'eau de mer (37) agencé en amont du réservoir (13), le régulateur du débit d'eau de mer (37) comprenant un carter fixe (60) comprenant des premières lumières (64),
**caractérisé en ce que** le régulateur (37) comprend un tiroir (62) comprenant des deuxièmes lumières (66), le tiroir (62) étant déplaçable par rapport au carter fixe (60) selon une direction de déplacement sous l'effet de la pression de l'eau de mer entrant dans le régulateur (37) à l'encontre de la sollicitation exercée par des moyens de sollicitation élastique (80) jusqu'à atteindre une position d'équilibre dans laquelle les premières et deuxièmes lumières (64, 66) présentent des zones en coïncidence définissant des ouvertures de sortie (70) de l'eau de mer vers le réservoir (13), le tiroir (62) étant déplaçable entre une position d'ouverture maximale des ouvertures de sortie (70), dans laquelle l'aire des ouvertures de sortie (70) est maximale et une position de restriction maximale des ouvertures de sortie (70), dans laquelle l'aire des ouvertures de sortie (70) est minimale.

2. Engin sous-marin (1) selon la revendication 1, dans lequel la longueur des deuxièmes lumières (66), prise selon la direction de déplacement du tiroir (62), est inférieure à la longueur des premières lumières (64), prise selon la direction de déplacement du tiroir (62).

3. Engin sous-marin (1) selon l'une des revendications 1 et 2, dans lequel les premières et deuxièmes lumières (64, 66) sont délimitées chacune par deux premiers bords (71, 75) parallèles entre eux et à la direction de déplacement du tiroir (62), reliés entre eux par deux deuxièmes bords (73, 77) parallèles entre eux, les premiers bords (71) des premières lumières (64) coïncidant sensiblement avec les premiers bords (75) des deuxièmes lumières (66).

4. Engin sous-marin (1) selon l'une quelconque des revendications précédentes, dans lequel la pile électrochimique (7) comporte une unique entrée (21) d'eau de mer depuis le milieu aquatique (19) environnant.

5. Engin sous-marin (1) selon l'une quelconque des revendications précédentes, dans lequel les moyens de sollicitation élastique comprennent un ressort hélicoïdal (80) interposé entre le tiroir (62) et le carter (60) et propre à rappeler le tiroir (62) vers sa position d'ouverture maximale.

6. Engin sous-marin (1) selon l'une quelconque des revendications précédentes, lequel est formé par une torpille.

## Patentansprüche

1. Unterwassergerät (1) mit einer elektrochemischen Batterie (7), die von einem Elektrolyt aktiviert wird und die vorgesehen ist, um elektrische Energie zu produzieren zur Versorgung des Unterwassergeräts (1), wobei die elektrochemische Batterie (7) aufweist:
- eine elektrochemische Zelle (10) zur Produktion der elektrischen Energie,
- einen Behälter (13), der vorgesehen ist, um den Elektrolyt zu enthalten,
- wenigstens eine Leitung (33) zur Beförderung von Meerwasser, die in dem Behälter (13) ausmündet,
- einen Meerwasserdurchflussregler (37), der vor dem Behälter (13) angeordnet ist, wobei der Meerwasserdurchflussregler (37) ein fixes Gehäuse (60) aufweist, das erste Öffnungen (64) aufweist,
**dadurch gekennzeichnet, dass** der Regler (37) einen Schieber (62) aufweist, der zweite Öffnungen (66) aufweist, wobei der Schieber (62) bezüglich des fixen Gehäuses (60) entlang einer Verlagerungsrichtung verlagerbar ist unter der Wirkung des Drucks des Meerwassers, das in den Regler (37) eintritt, gegen die Beanspruchung, die von elastischen Beanspruchungsmitteln (80) ausgeübt wird, bis zum Erreichen einer Gleichgewichtsposition, in welcher die ersten und die zweiten Öffnungen (64, 66) zusammenfallende Bereiche haben, die Ausgangsöffnungen (70) für das Meerwasser zu dem Behälter (13) hin definieren, wobei der Schieber (62) zwischen einer Maximalöffnungsposition der Ausgangsöffnungen (70), in welcher der Querschnitt der Ausgangsöffnungen (70) maximal ist, und einer Maximalrestriktionsposition der Ausgangsöffnungen (70) verlagerbar ist, in welcher der Querschnitt der Ausgangsöffnungen (70) minimal ist.

2. Unterwassergerät (1) gemäß Anspruch 1, wobei die Länge der zweiten Öffnungen (66), genommen entlang der Verlagerungsrichtung des Schiebers (62), kleiner ist als die Länge der ersten Öffnungen (64), genommen entlang der Verlagerungsrichtung des Schiebers (62).

3. Unterwassergerät (1) gemäß einem der Ansprüche 1 und 2, wobei die ersten und die zweiten Öffnungen (64, 66) jeweils von zwei ersten Rändern (71, 75) begrenzt sind, die zueinander und zur Verlagerungsrichtung des Schiebers (62) parallel sind und die untereinander mittels zweier zweiten Ränder (73, 77) verbunden sind, die zueinander parallel sind, wobei die ersten Ränder (71) der ersten Öffnungen (64) im Wesentlichen mit den ersten Rändern (75) der zweiten Öffnungen (66) zusammenfallen.

4. Unterwassergerät (1) gemäß irgendeinem der vorhergehenden Ansprüche, wobei die elektrochemische Batterie (7) einen einzelnen Eintritt (21) für Meerwasser von dem umgebenden Wassermilieu (19) aufweist.

5. Unterwassergerät (1) gemäß irgendeinem der vorhergehenden Ansprüche, wobei die elastischen Beanspruchungsmittel eine Schraubenfeder (80) aufweisen, die zwischen dem Schieber (62) und dem Gehäuse (60) zwischengefügt ist und die in der Lage ist, den Schieber (62) zu seiner Maximalöffnungsposition hin vorzuspannen.

6. Unterwassergerät (1) gemäß irgendeinem der vorhergehenden Ansprüche, welches von einem Torpedo gebildet ist.

## Claims

1. An underwater craft (1) having an electrochemical battery (7) activated by an electrolyte designed to produce the electrical energy for the underwater craft (1), the electrochemical battery (7) including:
- an electrochemical cell (10) for producing electricity;
- a tank (13) intended to contain the electrolyte;
- at least one seawater intake duct (33) emerging in the tank (13);
- a seawater flow rate regulator (37) arranged upstream from the tank (13), the seawater flow rate regulator (37) comprising a fixed housing (60) comprising first ports (64),
**characterized in that** the regulator (37) comprises a slide (62) comprising second ports (66), the slide (62) being movable, in relation to the fixed housing (60), in a movement direction under the effect of the pressure of the seawater entering the regulator (37) against the bias exerted by elastic biasing means (80) until it reaches a balanced position in which the first and second ports (64, 66) have coinciding areas defining outlet openings (70) for seawater to flow toward the tank (13), the slide (62) being movable between a maximum open position of the outlet openings (70), in which the area of the outlet openings (70) is at a maximum, and a maximum restriction position of the outlet openings (70), in which the area of the outlet openings (70) is at a minimum.

2. The underwater craft (1) according to claim 1, wherein the length of the second ports (66), taken in the direction of movement of the slide (62), is smaller than the length of the first ports (64), taken in the direction of movement of the slide (62).

3. The underwater craft (1) according to one of claims 1 and 2, wherein the first and second ports (64, 66) are each delimited by two first edges (71, 75) parallel to each other and to the movement direction of the slide (62), connected to each other by two second edges (73, 77) that are parallel to each other, the first edges (71) of the first ports (64) substantially coinciding with the first edges (75) of the second ports (66).

4. The underwater craft (1) according to any one of the preceding claims, wherein the electrochemical battery (7) includes a single inlet (21) for seawater from the surrounding aquatic environment (19).

5. The underwater craft (1) according to any one of the preceding claims, wherein the elastic biasing means comprise a helical spring (80) interposed between the slide (62) and the housing (60) and capable of recalling the slide (62) toward its maximum opening position.

6. The underwater craft (1) according to any one of the preceding claims, which is formed by a torpedo.
